(19) Europäisches Patentamt
European Patent Office
Office européen des brevets

(11) **EP 1 901 020 B1**

(12) **EUROPÄISCHE PATENTSCHRIFT**

(45) Veröffentlichungstag und Bekanntmachung des Hinweises auf die Patenterteilung:
**17.08.2016   Patentblatt 2016/33**

(51) Int Cl.:
*F28D 9/00* *(2006.01)*   *F28F 27/02* *(2006.01)*
*F28F 9/02* *(2006.01)*

(21) Anmeldenummer: **07017883.5**

(22) Anmeldetag: **12.09.2007**

(54) **Stapelscheibenwärmetauscher zur Ladeluftkühlung**

Stacked plate heat exchanger for charge air cooling

Echangeur thermique à plaques superposées destiné au refroidissement d'air de suralimentation

(84) Benannte Vertragsstaaten:
**DE FR**

(30) Priorität: **15.09.2006   DE 102006044154**

(43) Veröffentlichungstag der Anmeldung:
**19.03.2008   Patentblatt 2008/12**

(73) Patentinhaber: **MAHLE Behr GmbH & Co. KG**
**70469 Stuttgart (DE)**

(72) Erfinder: **Wegner, Jürgen**
**73054 Eislingen/Fils (DE)**

(74) Vertreter: **Grauel, Andreas**
**Grauel IP**
**Patentanwaltskanzlei**
**Wartbergstrasse 14**
**70191 Stuttgart (DE)**

(56) Entgegenhaltungen:
EP-A1- 1 553 370     EP-A2- 1 306 638
WO-A1-01/67021       WO-A1-01/90671
WO-A1-02/053998      WO-A1-2005/045344
WO-A1-2007/031230    DE-A1- 1 908 800

**Beschreibung**

Die vorliegende Erfindung betrifft einen Stapelscheibenwärmetauscher zur Ladeluftkühlung nach dem Oberbegriff des Anspruchs 1.

Zur Verbesserung der Leistung von Verbrennungsmotoren von Kraftfahrzeugen und zur Schadstoffreduzierung wird Frischluft aus der Umgebung angesaugt und in einem Kompressor, der insbesondere über eine Abgasturbine eines Turboladers angetrieben wird, verdichtet. Bei dem Verdichten der Ladeluft erwärmt sich die Ladeluft und muss anschließend wieder abgekühlt werden. Die Ladeluft wird in sogenannten Ladeluftkühlem abgekühlt. Ferner ist bekannt, dass die Aufladung der Ladeluft in mehreren Stufen erfolgen kann. So wird die angesaugte Ladeluft beispielsweise in einer ersten Kompressorstufe vorverdichtet, anschließend in einem ersten Ladeluftkühler abgekühlt und in einer weiteren zweiten Ladeluftkühlerstufe und/oder dritten Ladeluftkühlerstufe weiter verdichtet und anschließend erneut abgekühlt.

Die Ladeluftkühler können zum einen als direkte Ladeluftkühler ausgeführt sein. Bei der direkten Ladeluftkühlung wird die Ladeluft direkt von der Umgebungsluft gekühlt.

Neben der direkten Ladeluftkühlung ist auch die indirekte Ladeluftkühlung bekannt. Bei der indirekten Ladeluftkühlung wird ein Kühlmittel, insbesondere ein wasserhaltiges Kühlmittel, von der Umgebungsluft gekühlt.

Das Kühlmittel durchströmt anschließend den Ladeluftkühler und kühlt auf diese Weise die aufgeladene Luft.

Zur Ladeluftkühlung sind Stapelscheibenkühler bekannt. Die Stapelscheibenkühler sind mehrere Stapelscheiben übereinander gestapelt, wobei zwischen benachbarten Stapelsdheiben Durchtrittskanäle für die Ladeluft und/oder Durchtrittskanäle für das Kühlmittel ausgebildet werden. Die Scheiben werden zumeist mittels eines umformenden und/oder urformenden Fertigungsverfahrens hergestellt, übereinander gestapelt und anschließend stoffflüssig, durch Schweißen, Löten oder Kleben miteinander dicht verbunden.

Aus der DE 10 2005 043 294 ist ein Ladeluftkühler für Kraftfahrzeuge bekannt. Die Strömungskanäle des Ladeluftkühlers weisen Ein - und Austrittsquerschnitte für die Ladeluft auf, wobei Innenrippen in den Strömungskanälen jeweils eine Längserstreckung $L_{IR}$ aufweisen, die kleiner als eine Länge $L_{RO}$ ist.

Aus der DE 103 52 880 ist, ein Wärmeübertrager, insbesondere ein Ladeluft-/Kühlmittel-Kühler bekannt. Der Wärmeübertrager ist in Scheibenbauweise mit einer Mehrzahl von Scheiben ausgeführt. Zwischen zwei benachbarten Scheiben ist ein Zwischenraum definiert, der von einem Wärmeübertragermedium durchströmt ist. Der Wärmeübertrager weist je einen für die Scheiben gemeinsamen Wärmeübertragermedien-Eintritt und Wärmeübertragermedien-Austritt auf, wobei mindestens zwei Wärmeübertragermedium-Kanäle je Wärmeübertragermedium-Eintritt und/oder Wärmeübertragermedium-Austritt vorgesehen sind. Die Wärmeübertragermedium-Kanäle werden dabei vorzugsweise durch insbesondere miteinander fluchtende Durchbrüche in den einzelnen Scheiben gebildet.

Aus der DE 103 52 881 ist ferner ein Wärmeübertrager, insbesondere ein Ladeluft-/Kühlmittel-Kühler bekannt, der in Scheibenbauweise ausgebildet ist. Der Wärmeübertrager weist eine Mehrzahl von einem Kühlmittel und einem zu kühlenden Fluid durchströmte Scheiben auf. Der Ein- und/oder Ausströmbereich eines zu kühlenden Fluids, wie beispielsweise Ladeluft, ist dabei erweitert ausgebildet.

Aus der WO 01/67021 A1 ist ein Stapelscheibenwärmetauscher bekannt, aufweisend zumindest einen ersten Strömungskanal zur Durchströmung für zumindest ein erstes Medium und zumindest einen zweiten Strömungskanal zur Durchströmung für zumindest ein zweites Medium zur Kühlung des ersten Mediums, wobei eine Scheibe eine erste Öffnung zur Durchströmung für das erste Medium und zwei zweite Öffnungen zur Einströmung für das zweite Medium aufweist, wobei die erste Öffnung abschnittsweise zwischen den zwei zweiten Öffnungen angeordnet ist und einen geringeren Abstand zu einem Mittenabschnitt des Stapelscheibenwärmetauschers aufweist als eine der zweiten Öffnungen.

Es ist Aufgabe der vorliegenden Erfindung einen Stapelscheibenwärmetauscher der Eingangs genannten Art zu verbessern, kostengünstiger sowie bauraumsparender auszugestalten, insbesondere die Strömung des Kühlmittels, insbesondere des Kühlwassers, im Eintrittsbereich der heißen zu kühlenden Ladeluft derart zu verbessern, dass das Kühlmittel nicht siedet bzw. den Aggregatzustand wechselt. Insbesondere soll des weiteren die Steifigkeit der Ringendabschnitte, in denen insbesondere zu kühlende Ladeluft ein- bzw. ausströmt verbessert werden und/oder insbesondere die Abstützung von benachbarten Scheiben verbessert werden.

Die Aufgabe wird durch die Merkmale des Anspruchs 1 gelöst.

Es wird ein Stapelscheibenwärmetauscher zur Ladeluftkühlung vorgeschlagen, der zumindest einen ersten Strömungskanal zur Durchströmung für zumindest ein erstes Medium und zumindest einen zweiten Strömungskanal zur Durchströmung für zumindest ein zweites Medium zur Kühlung des ersten Mediums aufweist, wobei der zumindest eine erste Strömungskanal und der zumindest eine zweite Strömungskanal zwischen benachbarten Scheiben ausgebildet sind und zumindest eine Scheibe zumindest eine erste Öffnung zur Durchströmung für das erste Medium und zumindest zwei zweite Öffnungen zur Einströmung für das zweite Medium in den zumindest einen zweiten Strömungskanal aufweist, wobei die zumindest eine erste Öffnung zumindest abschnittsweise zwischen den zwei zweiten Öffnungen angeordnet ist, wobei die erste Öffnung zumindest abschnittsweise einen geringeren Abstand zu einem Mittenabstand des Stapelscheibenwärmetauscher aufweist, als eine der zweite Öffnungen, wobei zumindest ein Wulst zur Trennung des zweiten Mediums von dem ersten Medium sowie zur Strömungsleitung des zweiten Mediums aus der zumindest einen Scheibe ausgebildet ist, und wobei zumindest ein Wulstendabschnitt des zumindest einen Wulstes im Bereich der zweiten Öffnungen im Wesentlichen deltaförmig ausgebildet ist, und wobei der zumindest eine Wulstendabschnitt zumindest eine der zweiten Öffnungen zumindest bereichsweise umgibt und zumindest eine Kante zur Begrenzung der zumindest einen ersten Öffnung zumindest abschnittsweise im Wesentlichen V-förmig und mit zumindest einer Wölbung ausgebildet ist.

Der zumindest eine erste Strömungskanal dient zur Durchströmung für zumindest das erste Medium, insbesondere Ladeluft, und insbesondere sind mehrere erste Strömungskanäle vorgesehen. Der zumindest eine zweite Strömungskanal, insbesondere die zweiten Strömungskanäle, dienen zur Durchströmung für zumindest ein zweites Medium, insbesondere Kühlmittel wie wasserhaltiges Kühlmittel, zur Kühlung des ersten Mediums, Insbesondere der Ladeluft. Der zumindest eine erste Strömungskanal, insbesondere die ersten Strömungskanäle, sind zwischen benachbarten, insbesondere übereinander gestapelten und miteinander stoffschlüssig verbundenen, Scheiben ausgebildet. Der zumindest eine zweite Strömungskanal, insbesondere die zweiten Strömungskanäle, sind zwischen benachbarten, insbesondere übereinander gestapelten und miteinander stoffschlüssig verbundenen, Scheiben ausgebildet.

Die zumindest eine Scheibe, insbesondere die Scheiben, weisen zumindest eine erste Öffnung, insbesondere zwei erste Öffnungen, zur Durchströmung für das erste Medium, insbesondere Ladeluft, auf. Ferner weist die zumindest eine Scheibe, insbesondere die Scheiben, zumindest zwei zweite Öffnungen, insbesondere jeweils zwei zweite Öffnungen auf, zwei zur Einströmung und insbesondere zwei zur Abströmung für das zweite Medium, insbesondere das Kühlmittel, auf. Die zumindest eine erste Öffnung ist zumindest abschnittsweise zwischen den zwei zweiten Öffnungen angeordnet. Insbesondere ist für den Einströmbereich eine erste Öffnung zwischen zwei zweiten Öffnungen und eine weitere erste Öffnung zwischen zwei weiteren zweiten Öffnungen angeordnet.

Die zumindest eine erste Öffnung, insbesondere die jeweils ersten Öffnungen, weisen zumindest abschnittsweise einen geringeren Abstand zu einem Mittenabschnitt, insbesondere zur Mitte des Stapelscheibenwärmetauschers, auf als eine der zweiten Öffnungen. Insbesondere ragt ein Abschnitt der ersten Öffnung weiter in Richtung Mitte, insbesondere in Richtung Mittenabschnitt, des Stapelschelbenwärmetauschers.

Femer wird ein Stapelscheinwärmetauscher zur Ladeluftkühlung nach dem Oberbegriff des Anspruchs 1 vorgeschlagen, wobei in zumindest einem Scheibenendringabschnitt, insbesondere in jeweils einem Scheibenendringabschnitt zumindest eine Noppe, insbesondere eine Mehrzahl von Noppen, zur Versteifung des zumindest einen Scheibenendringabschnittes und damit des Stapelscheibenwärmetauschers eingebracht ist. Insbesondere wird dadurch der Scheibenendringabschnitt, welcher insbesondere die zumindest eine erste Öffnung zur Durchströmung mit erstem Medium, insbesondere mit Ladeluft, umfasst versteift und/oder benachbarte Scheibenendringabschnitte zueinander beabstandet. Insbesondere stützen sich benachbarte Scheibenendringabschnitte benachbarter Scheiben aneinander ab.

Erfindungsgemäß ist zumindest ein Wulst zur Trennung des zweiten Mediums des Kühlmittels, von dem ersten Medium, insbesondere der Ladeluft, sowie zur Strömungsleitung des zweiten Mediums, insbesondere des Kühlmittels, aus der zumindest einen Scheibe, insbesondere den Scheiben, ausgebildet. Auf diese Weise kann besonders vorteilhaft und bauraumsparend zweites Medium und erstes Medium auf einer, insbesondere derselben, Scheibenebene strömen, ohne dass es zu einer Vermischung kommt. Besonders vorteilhaft wird die Steifigkeit der Scheibe durch den Wulst verbessert und/oder eine zusätzliche Berührfläche, insbesondere eine Verbindungsfläche zwischen den gestapelten Scheiben geschaffen.

Ferner kann vorgesehen sein, dass zumindest ein Wulstendabschnitt des zumindest einen Wulstes im Bereich der zweiten Öffnungen im Wesentlichen deltaförmig ausgebildet ist und/oder dass der zumindest eine Wulstendabschnitt die zweite Öffnung zumindest bereichsweise umgibt. Auf diese Weise kann das zweite Kühlmittel besonders vorteilhaft aggregatszustandswechselfrei, insbesondere siedefrei, den Stapelscheibenwärmetauscher, insbesondere den zumindest einen zweiten Strömungskanal durchströmen. Insbesondere berühren sich die Scheiben und/oder Scheibenverbindungsflächen zumindest abschnittsweise und sind beispielsweise stoffschlüssig, insbesondere durch Schweißen, Löten, Kleben usw., miteinander verbunden.

In einer vorteilhaften Weiterbildung erstreckt sich der zumindest eine Wulst von der einen zweiten Öffnung zu der anderen zweiten Öffnung. Auf diese Weise wird zumindest ein Scheibenbereich, der mit ersten Medium, insbesondere Ladeluft, durchströmt wird, von einem zweiten Bereich, der mit Kühlmittel, insbesondere wasserhaltigem Kühlmittel, durchströmt wird, besonders vorteilhaft dicht abgetrennt.

In einer Weiterbildung ist die erste Öffnung symmetrisch ausgebildet. Auf diese Weise wird eine besonders vorteilhafte siedefreie Strömung des zweiten Mediums, insbesondere des Kühlmittels, in Richtung zum Wärmetauschermittenabschnitt bzw. vom Wärmetauschermittehäbschnitt zu den Öffnungen erzeugt. In einer anderen Ausbildung ist die erste Öffnung unsymmetrisch ausgebildet.

Des Weiteren ist erfindungsgemäß zumindest eine Kante zur Begrenzung der zumindest einen ersten Öffnung zumindest abschnittsweise im Wesentlichen V-förmig und/oder mit zumindest einer Wölbung ausgebildet. Auf diese Weise kann die Öffnung für den Eintritt des ersten Mediums, insbesondere der Ladeluft, besonders vorteilhaft vergrößert werden, so dass die Durchsatzmenge an gekühlter Ladeluft besonders vorteilhaft erhöht werden kann, wobei besonders vorteilhaft gleichzeitig ein Sieden des zweiten Mediums, insbesondere des Kühlmittels im Bereich der zweiten Öffnungen besonders vorteilhaft verhindert wird, ohne dass die Steifigkeit des Wärmetauschers abnimmt.

Ferner kann vorgesehen sein, dass die zumindest eine Kante zumindest abschnittsweise im Wesentlichen die Form einer Normalverteilungsfunktion aufweist. Auf diese Weise kann besonders vorteilhaft ein Sieden des zweiten Mediums, insbesondere des Kühlmittels, verhindert werden, da eine besonders vorteilhafte Strömung des zweiten Mediums ohne die Bildung von Totwassergebieten erzielt wird.

In einer weiteren Ausbildung ist die zumindest eine Kante zumindest abschnittsweise mit zumindest einem Polynom $y_n = a_n x^4 + b_n x^3 - c_n x^2 + d_n x + e_n$ mit n = 1,2,3,4,.... darstellbar bzw. wird dargestellt.

Ferner kann vorgesehen sein, dass die zumindest eine Kante im Bereich des Scheibenendringabschnitts von einem Scheibenrand der Scheibe 2 mm bis 30 mm, insbesondere 5 mm bis 20 mm beabstandet ist. Auf diese Weise wird eine optimale Öffnungsfläche der ersten Öffnung für das erste Medium, insbesondere der Ladeluft ausgebildet, ohne die Steifigkeit des Stapelscheibenwärmetauschers und/oder die Dichtheit des Stapelscheibenwärmetauschers insbesondere in den Scheibenendringabschnitten zu verschlechtem.

In einer weiteren vorteilhaften Ausbildung weist die zumindest eine Kante einen Kantenabschnitt auf, der zumindest bereichsweise einen Winkel $\alpha$ mit einer Strömungsrichtung FR des ersten Mediums einschließt, wobei der Winkel a Werte zwischen 40 ° und 70 °, insbesondere Werte zwischen 45° und 65 °, annimmt. Auf diese Weise wird eine optimale Ausbildung der ersten Öffnung erreicht, wodurch insbesondere die Strömung des zweiten Mediums, insbesondere des Kühlmittels derart ausgebildet wird bzw. sich derart ausbilden kann, dass insbesondere im Bereich der Eintrittsöffnungen für das zweite Medium, insbesondere das Kühlmittel, kein Sieden des zweiten Mediums, insbesondere des Kühlmittels, erfolgt und Totwassergebiete des zweiten Mediums, insbesondere des Kühlmittels, besonders vorteilhaft verhindert werden.

Weitere vorteilhafte Ausgestaltungen der Erfindung ergeben sich aus den Unteransprüchen und aus der Zeichnung.

Ausführungsbeispiele der Erfindung sind in der Zeichnung dargestellt und werden im Folgenden näher erläutert, wobei eine Beschränkung der Erfindung hierdurch nicht erfolgen soll. Es zeigen

Figur 1:	Eine isometrische Explosionsdarstellung eines Stapelscheibenwärmetauschers;

Figur 2a:	Eine Seitenansicht einer Scheibe eines Stapelscheibenwärmetauschers;

Figur 2b:	Eine Draufsicht einer Scheibe eines Stapelscheibenwärmetauschers;

Figur 3:	Eine isometrische Darstellung des Details a einer Scheibe ;

Figur 4:	Eine Draufsicht des Details a einer Scheibe;

Figur 5:	Eine Darstellung der Kante der ersten Öffnung mit neun Polynomen

Figur 6:	Ein Ausführungsbeispiel der Kante der ersten Öffnung mit neun Polynomen;

Figur 7:	Ein Ausführungsbeispiel mit einer Tabelle mit neun Polynomen zur Darstellung der Kante der ersten Öffnung ;

Figur 8:	Ein Ausführungsbeispiel der Kante der ersten Öffnung als Darstellung mit neun Polynomen ;

Figur 9:	Eine Bezugsfläche der ersten Öffnung ;

Figur 10:	Eine freie Fläche der ersten Öffnung

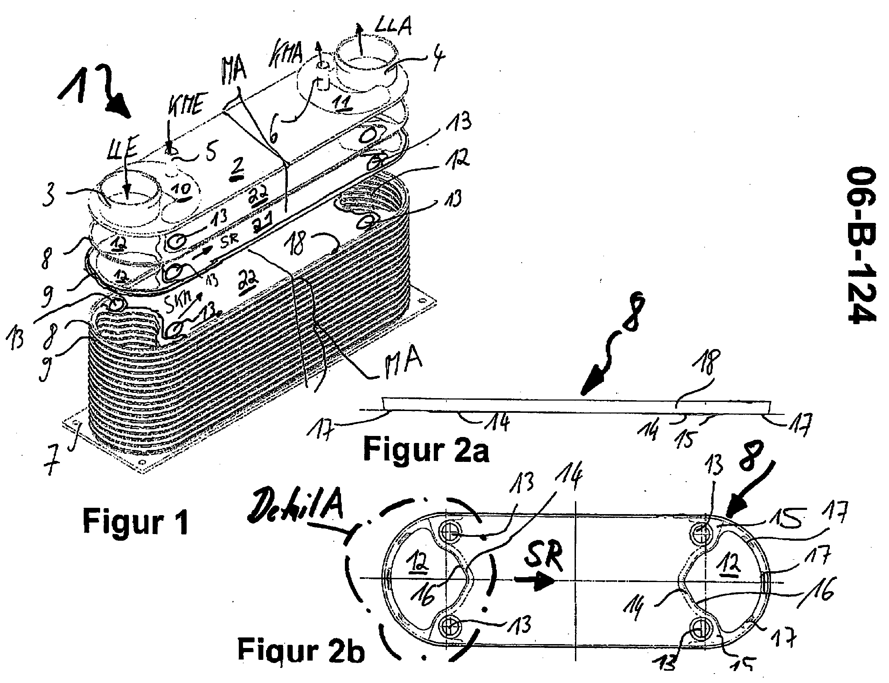

Figur 1 zeigt eine isometrische Explosionsdarstellung eines Stapelscheibenwärmetauschers 1.

Der Stapelscheibenwärmetauscher 1 weist zumindest eine Abdeckscheibe 2 eine Anzahl von ersten Scheiben 8, eine Anzahl von zweiten Scheiben 9 sowie eine Grundplatte 7 auf. Die Abdeckscheiben 2 können auch als Abdeckplatte 2 ausgebildet sein. Auf die Grundplatte 7 sind erste Scheiben 8 und zweite Scheiben 9 aufeinander gestapelt und miteinander stoffschlüssig, insbesondere durch Löten, Schweißen, Kleben usw., miteinander verbunden. Die Grundplatte 7 ist mit dem nicht näher bezeichneten Scheibenstapel ebenfalls stoffschlüssig, insbesondere durch Schweißen, Löten, Kleben usw. verbunden. Auf den nicht näher bezeichneten Scheibenstapel wird die Abdeckplatte 2 aufgesetzt und mit dem nicht näher bezeichneten Scheibenstapel stoffschlüssig, insbesondere durch Schweißen, Löten, Kleben usw., verbunden.

Die Abdeckscheibe 2 weist zumindest einen Ladeluftzuführstutzen 3 sowie zumindest einen Ladeluftabführstutzen 4 auf. Der Ladeluftzuführstutzen 3 und/oder der Ladeluftabführstutzen 4 sind mit der Abdeckscheibe 2 verbunden, insbesondere stoffschlüssig verbunden. In einem anderen Ausführungsbeispiel sind der zumindest eine Ladeluftzuführstutzen 3 und der zumindest eine Ladeluftabführstutzen 4 einteilig mit der Abdeckscheibe 2 ausgeführt. Femer ist zumindest ein Verteilungskanal 10 der über einen Kühlmittelzuführstutzen 5 mit Kühlmittel KM durch den Kühlmitteleintritt KME versorgt wird, mit der Abdeckscheibe 2 verbunden. Der Verteilungskanal 10 verteilt einströmendes Kühlmittel KM auf die zumindest zwei zweiten Öffnungen für den Kühlmitteleintritt KME des Kühlmittels KM in den Stapelscheibenwärmetauscher 1. Ferner ist zumindest ein Vereinigungskanal 11 mit der Abdeckscheibe 2 verbunden. Der Vereinigungskanal 11 vereinigt Kühlmittel KM, welches den Stapelscheibenwärmetauscher 1 durchströmt hat, um das Kühlmittel KM über den Kühlmittelabführstutzen 6 aus dem Stapelscheibenwärmetauscher 1 über den Kühlmittelaustritt KMA wieder abzuführen.

In einem anderen Ausführungsbeispiel sind der Zuführstutzen 5 und/oder der Verteilungskanal 11 und/oder Kühlmittelabführstutzen 6 einteilig mit der Abdeckscheibe 2 ausgebildet. Die Abdeckscheibe 2 ist aus Metall wie beispielsweise Aluminium, Edelstahl, Stahl oder aus einem anderen Werkstoff wie wärmebeständigem Kunststoff oder aus einem Faserverbundwerkstoff ausgebildet. Ebenso sind der Ladeluftzuführstutzen 3 und/oder Ladeluftabwehrstutzen 4 und/oder der Verteilungskanal 10 und/oder der Vereinigungskanal 11 und/oder der Kühlmittelzuführstutzen 5 und/oder Kühlmittelabführstutzen 6 aus einem Metall wie beispielsweise Aluminium, Stahl oder aus Edelstahl oder aus einem anderen Metall oder beispielsweise aus Kunststoff und/oder aus einem Faserverbundwerkstoff ausgebildet. Die Abdeckscheibe 2 ist mittels eines urformenden Fertigungsverfahrens wie beispielsweise Gießen oder Spritzgießen und/oder mittels eines umformenden Fertigungsverfahrens wie beispielsweise Stanzen, Prägen hergestellt. Die Abdeckscheibe 2 ist beispielsweise als Abdeckplatte 2 ausgebildet. Insbesondere ist die Abdeckscheibe 2 bzw. die Abdeckplatte 2 mittels eines trennenden Fertigungsverfahrens wie beispielsweise Strahltrennen, insbesondere Laserstrahlschneiden oder Wasserstrahlschneiden, aus einem Blech bzw. aus einer Platte herausgeschnitten. Die Abdeckscheibe 2 bzw. die Abdeckplatte 2 weist eine Dicke von 2mm bis 12mm, insbesondere von 6mm bis 10mm auf. In einem weiteren Ausführungsbeispiel ist neben der Abdeckscheibe 2 bzw. der Abdeckplatte 2 eine weitere zweite Abdeckscheibe vorgesehen, die insbesondere eine geringere Dicke als die Abdeckscheibe 2 bzw. die Abdeckplatte 2 aufweist und insbesondere mittels eines umformenden Fertigungsverfahrens hergestellt ist:

Der nicht näher bezeichnete Scheibehstapler ist aus ersten Scheiben 8 und aus zweiten Scheiben 9 ausgebildet. In einem ersten Ausführungsbeispiel sind abwechselnd eine erste Scheibe 8 auf einer zweiten Scheibe 9 usw. gestapelt.

In einem anderen nicht dargestellten Ausführungsbeispiel ist eine Anzahl von ersten Scheiben 8 aufeinander gestapelt, anschließend folgt ein Stapel von aufeinander gestapelten zweiten Scheiben 9.

In einem weiteren nicht dargestellten Ausführungsbeispiel kann der nicht näher bezeichnete Scheibenstapel nur aus ersten Scheiben 8 oder nur aus zweiten Scheiben 9 aufgebaut sein.

Die erste Scheibe 8 und/oder die zweite Scheibe 9 sind aus einem Material wie beispielsweise Aluminium, Edelstahl, Stahl oder aus einem anderen Metall oder in einem anderen Ausführungsbeispiel aus einem Faserverbundwerkstoff oder aus einem wärmebeständigen Kunststoff ausgebildet. Die zumindest eine erste Scheibe 8 und/oder die zumindest eine zweite Scheibe 9 sind mittels eines umformenden Fertigungsverfahrens wie beispielsweise Stanzen, Prägen, Lochen usw. und/oder mittels eines urtormenden Fertigungsverfahrens wie beispielsweise mittels Spritzgießens oder Laminierens hergestellt. Die zumindest eine erste Scheibe 8 und/oder die zumindest eine zweite Scheibe 9 weisen jeweils zumindest eine, Insbesondere zwei erste Öffnungen 12 auf. Durch die erste Öffnung 12 strömt Ladeluft LL, die insbesondere noch zu kühlen ist. Durch die zweite erste Öffnung 12 strömt bereits gekühlte Ladeluft in Richtung des Ladeluftaustritts LLA. Ferner weisen die zumindest eine erste Scheibe 8 und/oder die zumindest eine zweite Scheibe 9 zumindest zwei, insbesondere vier zweite Öffnungen 13 auf. Zwei erste zweite Öffnungen 13 dienen dabei dem Einströmen von Kühlmittel KM, die zwei anderen zweiten Öffnungen 13 dienen dabei dem Abströmen von Kältemittel KM. Zwischen einer benachbarten ersten Scheibe 8 und einer dazu benachbarten zweiten Scheibe 9 ist dabei entweder ein erster Strömungskanal 21 zur Durchströmung von Ladeluft LL oder ein zweiter Strömungskanal 22 zur Durchströmung von Kühlmittel KM ausgebildet.

Die Grundplatte 7 ist im Wesentlichen rechteckförmig und/oder rund und/oder dreieckig und/oder ellipsenförmig und/oder sternförmig oder aus einer beliebigen Kombination der zuvor genannten Formen ausgebildet. Im dargestellten Ausführungsbeispiel 4 weist die Grundplatte 7 nicht näher bezeichnete Bohrungen zur Befestigung des Stapelscheibenwärmetauschers 1 auf. Der nicht näher bezeichnete Scheibenstapel ist mit der Grundplatte 7 stoffschlüssig, insbesondere durch Schweißen, Kleben, Löten usw. und/oder formschlüssig beispielsweise durch Umbördeln oder Verkrimpen oder Schrauben verbunden. Die erste Scheibe 8 und/oder die Scheibe 9 und/oder die Abdeckscheibe 2 sind im Wesentlichen rechteckförmig ausgebildet, wobei insbesondere die nicht näher bezeichneten Scheibenenden im Wesentlichen die Form eines Halbkreises und/oder eines Kreissegmentes aufweisen.

Die ersten Scheiben 8 und die zweiten Scheiben 9 werden in einem Kassettierprozess übereinander gestapelt und derart verbunden, dass sie während eines darauf folgenden Verbindungsprozesses, insbesondere in einem Ofen unter Vorspannung verbleiben. Die ersten Scheiben 8 oder die zweiten Scheiben 9 und/oder die Grundplatte 7 und/oder die Abdeckscheibe 2 sind zumindest bereichsweise, insbesondere vollständig zumindest auf einer Seite oder auf beiden Seiten lotplattiert. Nach dem Vorkassettieren wird der Scheibenstapel mit der Abdeckscheibe 2 und der Grundplatte 7 in einem Ofen, insbesondere in einem Lötofen, eingebracht, so dass die Abdeckscheibe 2 der Scheibenstapel und die Grundplatte 7 stoffschlüssig und/oder dicht miteinander verbunden, insbesondere verlötet, verschweißt, verklebt werden.

In einem anderen Ausführungsbeispiel ist in der Abdeckscheibe 2 entweder nur der Ladeluftzuführstutzen 3 oder der Ladeluftabführstutzen 4 oder in einem anderen Ausführungsbeispiel weder der Ladeluftzuführstutzen 3 noch der Ladeluftabführstutzen 4 angeordnet. In diesem Fall ist der Ladeluftzuführstutzen 3 und/oder der Ladeluftabführstutzen 4 in der Grundplatte 7 angeordnet. In einem anderen Ausführungsbeispiel sind der Kühlmittelzuführstutzen 5 und/oder der Kühlmittelabführstutzen 6 ebenso nicht auf der Abdeckscheibe 2 angeordnet, sondern in der Grundplatte 7. In einem anderen Ausführungsbeispiel ist entweder der Kühlmittelzufuhrstutzen 5 auf der Abdeckscheibe 2 und der Kühlmittelabführstutzen 6 auf der Grundplatte 7 angeordnet.

**Figur 2a** zeigt eine Seitenansicht einer Scheibe 8 eines Stapelscheibenwärmetauschers 1. Gleiche Merkmale sind mit den gleichen Bezugszeichen versehen wie in Figur 1.

Figur 2a zeigt die erste Scheibe 8. Scheibe 8 weist einen im Wesentlichen, insbesondere einem vollständig umlaufenden, Scheibenrand 18 auf. Der Scheibenrand 18 weist zur Grundfläche der Scheibe einen nicht näher bezeichneten Winkel auf, der insbesondere Werte zwischen 20° und 90°, insbesondere Werte zwischen 30° und 85°, insbesondere Werte zwischen 35° und 80° annimmt. Die nicht näher bezeichneten Enden der Scheibe 8 sind nach unten zumindest zu einer Noppe 17 ausgebildet. Ebenso ist aus der Scheibe 8 im Bereich der ersten Öffnung 12 jeweils ein Wulst 14 nach unten ausgebildet. Der zumindest eine Wulst 14, insbesondere die zwei Wülste 14 einer Scheibe und/oder die zumindest eine Noppe 17, insbesondere die jeweils drei Noppen 17, sind mittels eines urformenden Fertigungsverfahrens wie beispielsweise Stanzen oder Prägen aus der Scheibe 8, 9 ausgebildet. In einem anderen Ausführungsbeispiel werden die zumindest eine Noppe 17 und/oder der zumindest eine Wulst 14 separat aus einem Blech ausgebildet und anschließend mit der Scheibe verbunden, insbesondere stoffschlüssig, insbesondere durch Schweißen, Löten, Kleben usw., verbunden. Der zumindest eine Wulst 14 weist zumindest einen Wulstendabschnitt 15, insbesondere zwei Wulstendabschnitte 15 auf.

Im Unterschied zur ersten Scheibe 8 ist bei der zweiten Scheibe 9 der zumindest eine Wulst 14, insbesondere die zwei Wülste 14 und/oder die zumindest eine Noppe 17, insbesondere die jeweils drei d. h. insgesamt sechs Noppen nach oben ausgebildet, im Gegensatz zur Scheibe 8, wo diese nach unten ausgebildet sind.

**Figur 2b** zeigt eine Draufsicht einer Scheibe 8 eines Stapelscheibenwärmetauschers 1. Gleiche Merkmale sind mit dem gleichen Bezugszeichen versehen wie in den vorherigen Figuren.

Die erste Scheibe 8 weist im dargestellten Ausführungsbeispiel zwei zweite Öffnungen 13 an jeder Seite, also insgesamt vier zweite Öffnungen 13 auf. Im Bereich der nicht näher bezeichneten Scheibenenden ist jeweils eine erste Öffnung 12 angeordnet. Die Scheibe 8 weist somit zumindest insgesamt zwei erste Öffnungen 12 auf. Die ersten Öffnungen 12 und/oder die zweiten Öffnungen 13 sind mittels eines umformenden Fertigungsverfahrens wie Prägen, Stanzen und/oder mittels eines abtragenden Fertigungsverfahrens wie beispielsweise Bohren, Fräsen, Laserstrahlschweißen aus der Scheibe 8 ausgebildet. Die nicht näher bezeichneten Scheibenenden sind im Wesentlichen halbkreisförmig und/oder kreissegmentförmig ausgebildet. Im Bereich der nicht näher bezeichneten Scheibenenden ist jeweils ein Scheibenendenringabschnitt und drei Noppen 17 aus der Scheibe 8 ausgebildet. Die Noppen 17 sind im Wesentlichen ähnlich rechteckförmig und/oder länglich rund ausgebildet.

Eine Scheibe 8 weist zwei Ringendenabschnitte auf. In einem anderen Ausführungsbeispiel sind in jeweils einem Scheibenendenringabschnitt ein, zwei, drei, vier oder fünf Noppen aus der Scheibe 8 ausgebildet bzw. in die Scheibe 8 eingebracht. In dem Bereich, in dem die nicht näher bezeichneten halbkreisförmig ausgebildeten Scheibenenden in den im Wesentlichen nicht näher bezeichneten rechteckförmigen Teil der Scheibe 8 übergehen, ist im Bereich des Scheibenrandes jeweils eine zweite Öffnung 13 in die Scheide 8 eingebracht. Die zumindest eine zweite Öffnung 13 ist im dargestellten Ausführungsbeispiel kreisrundförmig ausgebildet. In einem anderen Ausführungsbeispiel weist die zumindest eine zweite Öffnung 13 einen ellipsenförmigen Querschnitt undloder einen rechteckförmigen Querschnitt und/oder dreieckförmigen Querschnitt und/oder einen viereckförmigen Querschnitt oder einen Querschnitt aus einer beliebigen Kombination der zuvor genannten Querschnittsformen auf. Insgesamt sind die dargestellten Ausführungsbeispiele in eine Scheibe 8 vier zweite Öffnungen 13 eingebracht. Zwischen den jeweils zwei zweiten Öffnungen 13 im Bereich der Scheibenenden verläuft ein Wulst 14. Der Wulst 14 begrenzt zumindest bereichsweise die zumindest eine erste Öffnung 12 der Scheibe 8. Der Wulst 14 herläuft im Wesentlichen parallel zur Kante 16 der zumirtdest einen ersten Öffnung 12. Im Bereich der zweiten Öffnung 13 verbreitert sich der Wulst 14 jeweils im Bereich eines Wulstendabschnittes deltaförmig und umgreift bzw. umfließt bzw. umströmt die zweite Öffnung 13 gewissermaßen. Ein Wulst 14 weist somit zumindest zwei Wulstehdabschnitte 15 auf, jeweils einen im Bereich der jeweiligen Öffnung 13. Auf diese Weise trennen die zwei Wülste 14 die je zwei Scheibenendbereiche, die im Wesentlichen halbkreisförmig ausgebildet ist von einem Scheibenmittenbereich der im Wesentlichen X-förmig ausgebildet ist. Die Kanten 6 werden dabei im Wesentlichen von den Wülsten 14 gebildet.

Die Scheibe 9 unterscheidet sich von der Scheibe 8 lediglich dadurch, dass der zumindest eine Wulst 14 und die Noppen 17 zur jeweils anderen, d. h. zur entgegengesetzten Scheibenseite ausgebildet sind. Darüber hinaus können in einem anderen Ausführungsbeispiel die Noppen 17 einer Scheibe abwechselnd zu einer Scheibenseite und zur gegenüberliegenden anderen Scheibenseite ausgebildet sein. In Richtung der Strömungsrichtung SR strömt die Ladeluft durch die Scheibe. In einem anderen Ausführungsbeispiel strömt die Ladeluft entgegen der Strömungsrichtung SR.

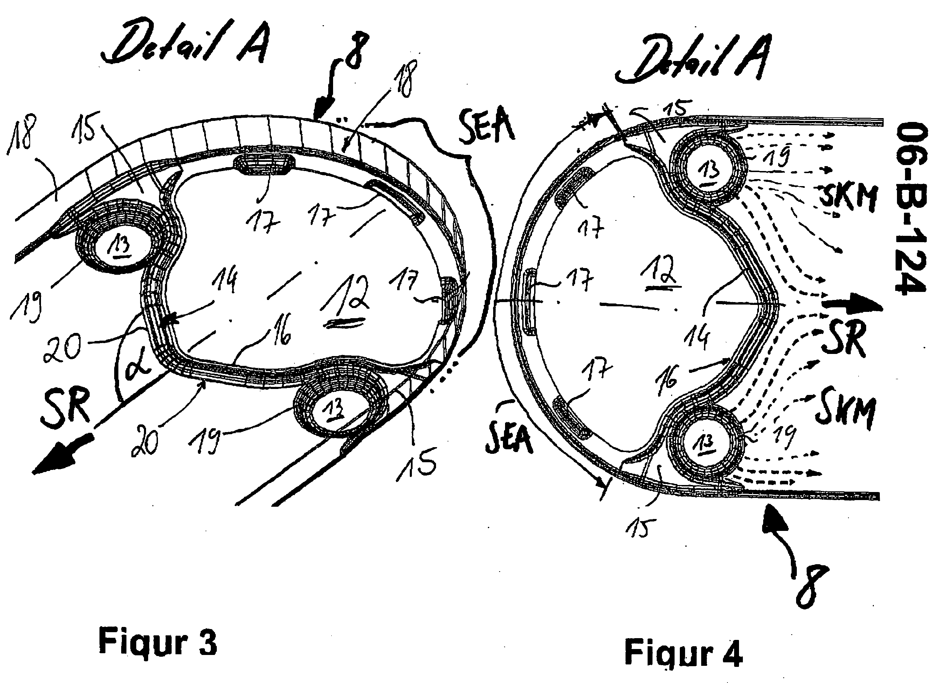

**Figur 3** zeigt eine isometrische Darstellung des Details a einer Scheibe 8. Gleiche Merkmale sind mit den gleichen Bezugszeichen versehen wie in den vorherigen Figuren.

Das Detail a zeigt jeweils einen Endbereich einer Scheibe 8 vergrößert. Die erste Öffnung 12 ist hierbei symmetrisch ausgebildet und wird von der Kante 16 der Scheibe 8 begrenzt. Die Öffnung 12 ist derart ausgebildet, dass ein erster Öffnungsbereich im Wesentlichen halbkreisförmig oder kreissegmentförmig ausgebildet ist und ein zweiter Öffnungsbereich der Öffnung 12 im Wesentlichen die Form und/oder die Fläche einer Normalverteilungsfunktion aufweist. In dem Bereich, in dem die Kante 16 im Wesentlichen normalverteilungsfunktionsförmig ausgebildet ist, verläuft im Wesentlichen parallel zur Kante 16 der Wulst 14. Die zumindest eine erste Öffnung 12 ist dabei zwischen den zumindest zwei zweiten Öffnungen 13 angeordnet. Die zweiten Öffnungen 13 weisen dabei einen zumindest im Wesentlichen kegelabschnittsförmigen Dom 19 auf. Die Kante 16 insbesondere der Wulst 14 weist einen Kantenabschnitt 20 auf der einen Winkel $\alpha$ mit der Strömungsrichtung SR der Ladeluft bzw. in einem anderen Ausführungsbeispiel der Strömungsrichtung des Kühlmittels, aufweist. Der Winkel $\alpha$ nimmt dabei Werte zwischen 40° und 70°, insbesondere Werte zwischen 45° und 65° an.

Der Wulst 14 berührt mit den Wulstendabschnitten, die im Wesentlichen deltaförmig ausgebildet sind und die zweite Öffnung 13 umgreifen bzw. umschließen den Scheibenrand 18.

Die erste Öffnung 12 ist im Wesentlichen symmetrisch, insbesondere achssymmetrisch zur Strömungsrichtung SR ausgebildet. Der Scheibenendenringabschnitt SEA ist insbesondere kreisringsegmentförmig ausgebildet und insbesondere einteilig mit der Scheibe 8 ausgebildet. Im dargestellten Ausführungsbeispiel ist die mittlere Noppe 17 nach oben ausgeprägt, während die beiden anderen Noppen 17, die jeweils rechts und links der ersten Noppe 17 angeordnet sind, Im Wesentlichen nach unten entgegengesetzt zur Richtung der ersten Noppe 17 ausgebildet sind.

**Figur 4** zeigt eine Draufsicht des Details a einer Scheibe 8. Gleiche Merkmale sind mit den gleichen Bezugszeichen versehen wie in den vorherigen Figuren.

In Figur 4 ist insbesondere zusätzlich der Strömungsverlauf des Kühlmittels KM in den zweiten Strömungskanälen 22 dargestellt. Insbesondere verläuft die Strömung des Kühlmittels SKM insbesondere benachbart zum Wulst 14 im Wesentlichen derart parallel, dass sich keine Totwassergebiete ausbilden und somit das Kühlmittel nicht den Aggregatzustand wechselt und von dem flüssigen Zustand In den gasförmigen Zustand übergeht. Auf diese Weise wird ein Sieden des Kühlmittels besonders vorteilhaft verhindert.

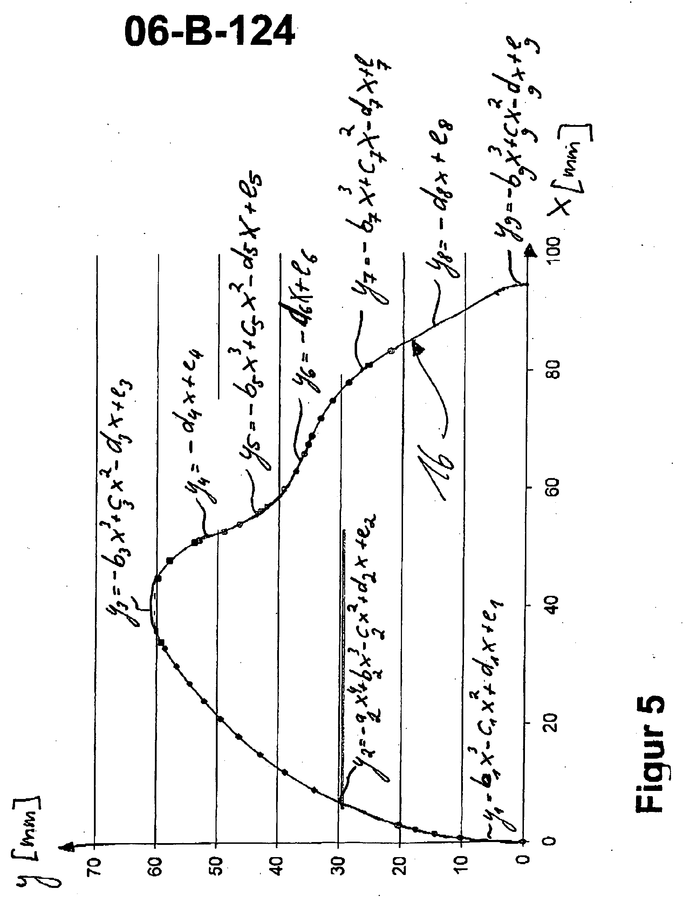

Figur 5 zeigt eine Darstellung der Kante 16 der ersten Öffnung 12, wobei nur die Hälfte der Kante 16 dargestellt ist, da die Öffnung 12 achsensymmetrisch, zur x-Achse ist. Die x-Achse entspricht in diesem Fall der Strömungsrichtung SR, verläuft also insbesondere in Strömungsrichtung auf der Mittelachse der Scheibe. Gleiche Merkmale sind mit den gleichen Bezugszeichen versehen wie in den vorherigen Figuren.

Die Einheit der x-Achse ist Millimeter, über der x-Achse ist die y-Achse aufgetragen, die im Wesentlichen senkrecht zur x-Achse, insbesondere zur Strömungsrichtung SR verläuft. Die Einheit der y-Achse beträgt ebenfalls Millimeter. Die Kante 16 der ersten Öffnung 12 ist mittels zumindest eines Polynoms, insbesondere mittels einer Vielzahl von Polynomen $Y_N = a_n x^4 + b_n x' - c_n x^2 + d_n x + e_n$ mit n = 1,2,3,4,5,6,7,8,9,... darstellbar bzw. wird auf diese Weise dargestellt. Im dargestellten Ausführungsbeispiel ist die Hälfte der Kante 16 mittels neun Polynomen dargestellt. Die neun Kurven werden aneinander gesetzt und bilden somit die Hälfte der Kante 16.

$$\text{Polynom 1:} \qquad y_1 = b_1 x^3 - c_1 x^2 + d_1 x + e_1$$

$$\text{Polynom 2:} \qquad y_2 = -a_2 x^4 + b_2 x^3 - c_2 x^2 + d_2 x + e_2$$

$$\text{Polynom 3:} \qquad y_3 = -b_3 x^3 + c_3 x^2 + d_3 x + e_3$$

$$\text{Polynom 4:} \qquad y_4 = -d_4 x + e_4$$

$$\text{Polynom 5:} \qquad y_5 = -b_5x^3 + c_5x^2 - d_5x + e_5$$

$$\text{Polynom 6:} \qquad y_6 = -d_6x + e_6$$

$$\text{Polynom 7:} \qquad y_7 = -b_7x^3 + c_7x^2 - d_7x + e_7$$

$$\text{Polynom 8:} \qquad y_8 = -d_8x + e_8$$

$$\text{Polynom 9:} \qquad y_9 = -b_9x^3 + c_9x^2 - d_9x + e_9$$

Beim Einsetzen eines Wertes für x in das Polynom des entsprechenden Bereichs wird dabei der y-Wert erhalten.

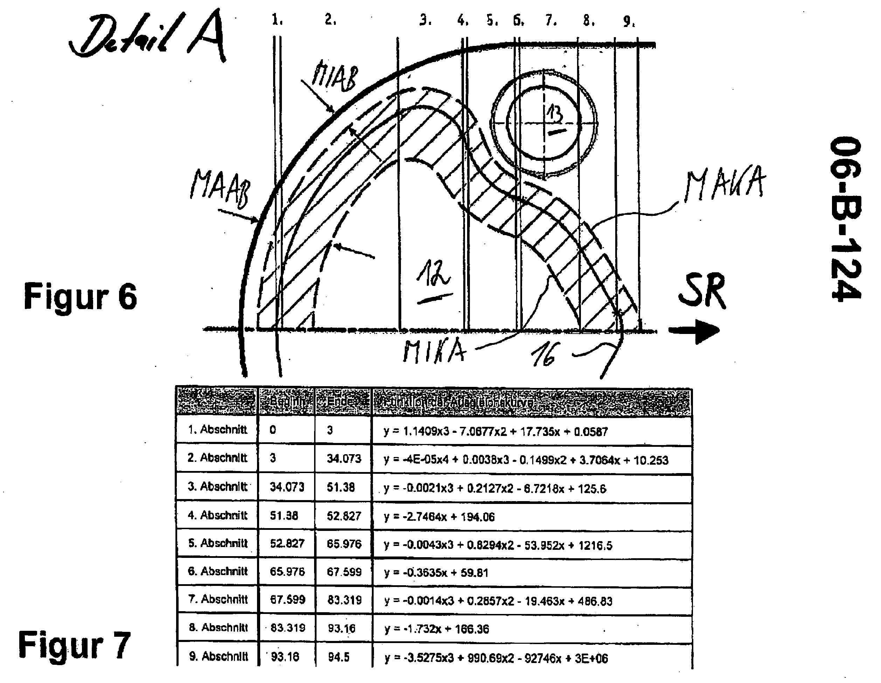

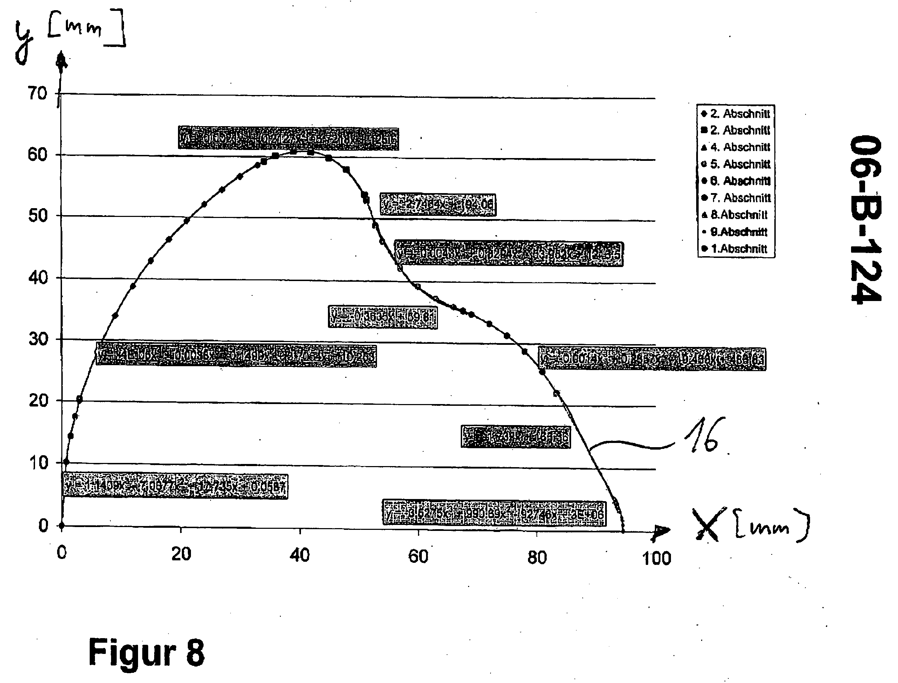

**Figur 6** zeigt ein Ausführungsbeispiel der Darstellung der Kante (16) mittels der neun Polynome. In Figur 8 sind dabei die neun Bereiche 1 bis 9 dargestellt, in denen das jeweilige Polynom gilt. Dabei stellt die Kante (16) die Polynomdarstellung mit dem bevorzugten Ausführungsbeispiel dar. Darüber hinaus müssen Grenzwerte für die Öffnung eingehalten werden. Es gibt eine Maximalkante MAKA, die vom Scheibenrand den minimalen Abstand MIAB aufweist. Der minimale Abstand MIAB nimmt dabei Werte zwischen 2 mm und 5 mm, insbesondere zwischen 3 mm und 4,5 mm an. Die kleinste Öffnung der ersten Öffnung (12) wird dabei durch die Minimalkante MIKA begrenzt. Die Minimalkante weist im Bereich des Scheibenendringabschnitts von dem Scheibenrand den Maximalabstand MAAB auf. Der Maximalabstand nimmt dabei Werte zwischen 20 mm und 30 mm, insbesondere Werte zwischen 25 mm und 29 mm an. Somit kann die Kante (16) zwischen der Minimalkante MIKA und der Maximalkante MAKA verlaufen.

**Figur 7** zeigt ein Ausführungsbeispiel mit der zugehörigen Wertetabelle der neun Polynome und ihrer jeweiligen Geltungsbereiche. Beginn bezeichnet damit den x-Wert des Beginns des jeweiligen Polynoms. Ende bezeichnet den x-Wert des Intervallendes, in dem das jeweilige Polynom gilt. Funktion der Ausgleichskurve bezeichnet das jeweilige Polynom des jeweiligen Abschnitts. Das jeweilige Polynom ist dabei ein bevorzugtes Ausführungsbeispiel des jeweils in Figur 5 dargestellten Polynoms. Die Koeffizienten der Polynome können dabei bevorzugt folgende Werte annehmen:

$$\text{Polynom 1:} \qquad y_1 = b_1x^3 - c_1x^2 + d_1x + e_1$$

mit

$1{,}0 \leq b_1 \leq 1{,}2$; insbesondere $b_1 = 1{,}1409$
$7{,}0 \leq c_1 \leq 7{,}2$; insbesondere $c_1 = 7{,}0677$
$17{,}0 \leq d_1 \leq 18{,}0$; insbesondere $d_1 = 17{,}735$
$0{,}01 \leq e_1 \leq 0{,}0587$; insbesondere $e_1 = 0{,}0587$

$$\text{Polynom 2:} \qquad y_2 = -a_2x^4 + b_2x^3 - c_2x^2 + d_2x + e_2$$

mit

$3{,}5 \cdot 10^{-5} \leq a_2 \leq 4{,}5 \cdot 10^{-5}$; insbesondere $a_2 = 4{,}0 \cdot 10^{-5}$
$0{,}0030 \leq b_2 \leq 0{,}0045$; insbesondere $b_2 = 0{,}0038$
$0{,}13 \leq c_2 \leq 0{,}155$; insbesondere $c_2 = 0{,}1499$
$3{,}5 \leq d_2 \leq 3{,}9$; insbesondere $d_2 = 3{,}7064$
$10{,}0 \leq e_2 \leq 10{,}5$; insbesondere $e_2 = 10{,}253$

$$\text{Polynom 3:} \qquad y_3 = -b_3x^3 + c_3x^2 + d_3x + e_3$$

$0{,}001 \leq b_3 \leq 0{,}005$; insbesondere $b_3 = 0{,}0021$
$0{,}19 \leq c_3 \leq 0{,}25$; insbesondere $c_3 = 0{,}2127$

6,5≤$d_3$≤6,9; insbesondere $d_3$=6,7218
1245≤$e_3$≤126; insbesondere $e_3$=125,6

$$\text{Polynom 4:} \qquad y_4 = -d_4 x + e_4$$

mit

2,5≤$d_4$≤2,9; insbesondere $d_4$=2,7464
192≤$e_4$≤196; insbesondere $e_4$=194,6

$$\text{Polynom 5:} \qquad y_5 = -b_5 x^3 + c_5 x^2 - d_5 x + e_5$$

mit

0,004≤$b_5$≤0,0049; insbesondere $b_5$=0,0043
0,80≤$c_5$≤0,89; insbesondere $c_5$=0,8294
53,0≤$d_5$≤54,5; insbesondere $d_5$=53,952
1214≤$e_5$≤1218; insbesondere $e_5$=1216,5

$$\text{Polynom 6:} \qquad y_6 = -d_6 x + e_6$$

mit

0,34≤$d_6$≤0,39: insbesondere $d_6$=0,3635
57,0≤$e_6$≤61.0 insbesondere $e_6$=59.81

$$\text{Polynom 7:} \qquad y_7 = -b_7 x^3 + c_7 x^2 - d_7 x + e_7$$

mit

0,0011≤$b_7$≤0,0017; insbesondere $b_7$=0,0014
0,25≤$c_7$≤0,30; insbesondere $c_7$=0,2857
19,1≤$d_7$≤19,7; insbesondere $d_7$=19,463
484,0≤$e_7$≤489,0: insbesondere $e_7$=486,83

$$\text{Polynom 8:} \qquad y_8 = -d_8 x + e_8$$

mit

1,4≤$d_8$≤1,9; insbesondere $d_8$=1,732
163≤$e_8$≤169 insbesondere $e_8$=166,36

$$\text{Polynom 9:} \qquad y_9 = -b_9 x^3 + c_9 x^2 - d_9 x + e_9$$

mit

3,3≤$b_9$≤3,7; insbesondere $b_9$=3,5275
988≤$c_9$≤992; insbesondere $c_9$=990,69
92740≤$d_9$≤92750; insbesondere $d_9$=92746
2,5*10$^6$≤$e_9$≤3,5*10$^6$; insbesondere eg=3,0*10$^6$

Figur 8 zeigt das bevorzugte Ausführungsbeispiel der Kantendarstellung der Kante (16) mit den jeweils zugehörigen Polynomen für die jeweils neun Polynomabschnitte.

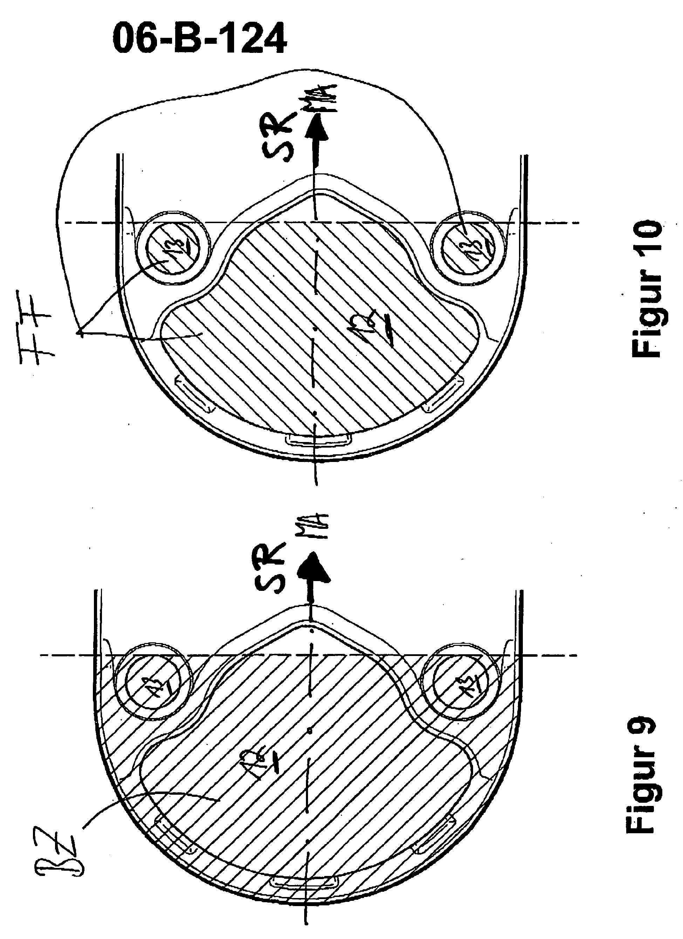

Figur 9 zeigt eine Bezugsfläche BZ eines Scheibenendbereichs der Scheibe (8,9) und in Figur 10 ist die freie Querschnittsfläche FF der ersten Öffnung (12) und der zugehörigen zwei zweiten Öffnungen (13) dargestellt. Gleiche Merkmale sind mit den gleichen Bezugszeichen versehen wie in den vorherigen Figuren.

Die Bezugsfläche nimmt dabei Werte zwischen 5.000 mm$^2$ und 20.000 mm$^2$, insbesondere Werte zwischen 10.000 mm$^2$ und 15.000 mm$^2$, insbesondere Werte zwischen 12.000 mm$^2$ und 14.000 mm$^2$ an. Im dargestellten Ausführungsbeispiel beträgt die Bezugsfläche BZ 12.006 mm$^2$. Die freie Querschnittsfläche FF wird dabei aus den zwei Öffnungsquerschnitten der zweiten Öffnungen (13) und aus einem Teil des Öffnungsquerschnitts der ersten Öffnung (12) gebildet. Dabei ist der Teil des Öffnungsquerschnitts der ersten Öffnung (12) die in die freie Fläche FF mit eingeht durch den Öffnungsbereichabschnitt gebildet, der von der dem Mittenabschnitt MA nächstgelegenen Tangente, welche die beiden zweiten Öffnungen (13) tangiert und der Kante (16) die im Bereich des Ringendenabschnitts SEA. Der freie Querschnitt FF nimmt dabei insbesondere Werte zwischen 7.000 mm$^2$ und 10.000 mm$^2$, insbesondere zwischen 7.810 mm$^2$ und 9.210 mm$^2$ an. Dabei kann ein Verhältnis gebildet werden BZ/FF, welches insbesondere 0,5 bis 0,9, insbesondere 0,6 bis 0,8, insbesondere 0,65 bis 0,77 beträgt.

Zwischen benachbarten Scheiben 8, 9, insbesondere in den ersten Strömungskanälen 21 und/oder in den zweiten Strömungskanälen 22 sind Turbulenzbleche mit turbulenzerzeugenden Ausbildungen wie Noppen oder Fahnen eingebracht zur Verbesserung der Wärmeübertragung. Die Turbulenzbleche sind beispielsweise mit der zumindest einen ersten Scheibe 8 und/oder mit der zumindest einen zweiten Scheibe 9 stoffschlüssig, insbesondere mittels Löten, Schweißen, Kleben usw. verbunden. In einem anderen Ausführungsbeispiel sind turbulenzerzeugende Noppen, Ausprägungen usw. direkt in die zumindest eine erste Scheibe 8 und/oder in die zumindest eine zweite Scheibe nach innen in Richtung des zumindest einen Strömungskanals 21, 22 weisend und/oder nach außen weisend eingebracht.

**Patentansprüche**

1. Stapelscheibenwärmetauscher zur Ladeluftkühlung mit zumindest einem ersten Strömungskanal (21) zur Durchströmung für zumindest ein erstes Medium (LL) und mit zumindest einem zweiten Strömungskanal (22) zur Durchströmung für zumindest ein zweites Medium (KM) zur Kühlung des ersten Mediums (LL),

   wobei der zumindest eine erste Strömungskanal (21) und der zumindest eine zweite Strömungskanal (22) zwischen benachbarten Scheiben (8,9) ausgebildet sind und zumindest eine Scheibe (8,9) zumindest eine erste Öffnung (12) zur Durchströmung für das erste Medium (LL) und zumindest zwei zweite Öffnungen (13) zur Einströmung für das zweite Medium (KM) in den zumindest einen zweiten Strömungskanal (22) aufweist, wobei die zumindest eine erste Öffnung (12) zumindest abschnittsweise zwischen den zwei zweiten Öffnungen (13) angeordnet ist, wobei die erste Öffnung (12) zumindest abschnittsweise einen geringeren Abstand zu einem Mittenabschnitt (MA) des Stapelscheibenwärmetauschers (1) aufweist als eine der zweiten Öffnungen (13), **dadurch gekennzeichnet, dass** zumindest ein Wulst (14) zur Trennung des zweiten Mediums (KM) von dem ersten Medium (LL) sowie zur Strömungsleitung des zweiten Mediums (KM) aus der zumindest einen Scheibe (8,9) ausgebildet ist, und dass zumindest ein Wulstendabschnitt (15) des zumindest einen Wulstes (14) im Bereich der zweiten Öffnungen (13) im Wesentlichen deltaförmig ausgebildet ist und dass der zumindest eine Wulstendabschnitt zumindest eine der zweiten Öffnungen (13) zumindest bereichsweise umgibt und zumindest eine Kante (16) zur Begrenzung der zumindest einen ersten Öffnung (12) zumindest abschnittsweise im Wesentlichen V-förmig und mit zumindest einer Wölbung ausgebildet ist.

2. Stapelscheibenwärmetauscher zur Ladeluftkühlung nach Anspruch 1, **dadurch gekennzeichnet, dass** in zumindest einen Scheibenendringabschnitt (SEA) zumindest eine Noppe (17) zur Versteifung und/oder zur Abstandshalterung des zumindest einen Scheibenendringabschnittes (SEA) eingebracht ist.

3. Stapelscheibenwärmetauscher nach Anspruch 1 oder 2, **dadurch gekennzeichnet, dass** sich der zumindest eine Wulst (14) von der einen zweiten Öffnung (13) zu der anderen zweiten Öffnung (13) erstreckt.

4. Stapelscheibenwärmetauscher nach einem der vorhergehenden Ansprüche, **dadurch gekennzeichnet, dass** die erste Öffnung (12) symmetrisch ausgebildet ist.

5. Stapelscheibenwärmetauscher nach einem der Ansprüche 1 bis 4, **dadurch gekennzeichnet, dass** die zumindest eine Kante (16) zumindest abschnittsweise im Wesentlichen die Form einer Normalverteilungsfunktion und/oder zumindest eines Polynoms n-ten Grades aufweist.

6. Stapelscheibenwärmetauscher nach einem der Ansprüche 1 bis 5, **dadurch gekennzeichnet, dass** ein Verlauf der zumindest einen Kante (16) zumindest abschnittsweise die Form des Polynoms $y_n = a_n x^4 + b_n x^3 - c_n x^2 + d_n x + e_n$ mit n= 1,2,3,4,... annimmt.

7. Stapelscheibenwärmetauscher nach einem der Ansprüche 1 bis 6, **dadurch gekennzeichnet, dass** die zumindest eine Kante (16) im Bereich des Scheibenendringabschnitts (SEA) von einem Scheibenrand (18) der Scheibe (8,9) 2 mm bis 30 mm, insbesondere 5 mm bis 20 mm, beabstandet ist.

8. Stapelscheibenwärmetauscher nach einem der Ansprüche 1 bis 7, **dadurch gekennzeichnet, dass** zumindest eine Kante (16) einen Kantenabschnitt (20) aufweist, der zumindest bereichsweise einen Winkel ($\alpha$) mit einer Strömungsrichtung (SR) des ersten Mediums (LL) einschließt, wobei der Winkel ($\alpha$) Werte zwischen 40° und 70°, insbesondere Werte zwischen 45° und 65°, annimmt.

**Claims**

1. A stacked-plate heat exchanger for cooling charge air, having at least one first flow duct (21) for at least a first medium (LL) to flow through, and at least a second flow duct (22) for at least a second medium (KM) to flow through in order to cool the first medium (LL),
   wherein the at least one first flow duct (21) and the at least one second flow duct (22) are formed between adjacent plates (8, 9), and at least one plate (8, 9) has at least a first opening (12) for the first medium (LL) to flow through and at least two second openings (13) for the second medium (KM) to flow through into the at least one second flow duct (22), wherein the at least one first opening (12) is arranged at least in certain sections between the two second openings (13), wherein the first opening (12) is at a smaller distance, at least in certain sections, from a central section (MA) of the stacked-plate heat exchanger (1) than one of the second openings (13), **characterised in that** at least one bead (14) is designed to separate the second medium (KM) from the first medium (LL) and to direct the flow of the second medium (KM) out of the at least one plate (8, 9), and that at least one bead end section (15) of the at least one bead (14) is formed in a substantial delta shape in the region of the second openings (13) and that the at least one bead end section surrounds at least one of the second openings (13) at least in certain areas and that at least one edge (16) is designed to delimit the at least one first opening (12) at least in certain sections in a substantially V shape and with at least one curve.

2. The stacked-plate heat exchanger for cooling charge air according to claim 1, **characterised in that** at least one knob (17) for stiffening and/or maintaining the distance from the at least one plate end ring section (SEA) is introduced into at least one plate end ring section (SEA).

3. The stacked-plate heat exchanger according to claim 1 or 2, **characterised in that** the at least one bead (14) extends from the one second opening (13) to the other second opening (13).

4. The stacked-plate heat exchanger according to one of the preceding claims, **characterised in that** the first opening (12) is of symmetrical design.

5. The stacked-plate heat exchanger according to one of claims 1 to 4, **characterised in that** the at least one edge (16) is at least in certain sections substantially in the shape of a normal distribution function and/or has at least one nth degree polynomial.

6. The stacked-plate heat exchanger according to one of claims 1 to 5, **characterised in that** a profile of the at least one edge (16) assumes, at least in certain sections, the shape of the polynomial $y_n = a_n x^4 + b_n x^3 - c_n x^2 + d_n x + e_n$ with n = 1, 2, 3, 4,....

7. The stacked-plate heat exchanger according to one of claims 1 to 6, **characterised in that** in the region of the plate end ring section (SEA), the at least one edge (16) is spaced apart from a plate edge (18) of the plate (8, 9) by 2 mm to 30 mm, in particular 5 mm to 20 mm.

8. The stacked-plate heat exchanger according to one of claims 1 to 7, **characterised in that** at least one edge (16) has an edge section (20) which includes, at least in certain areas, an angle ($\alpha$) with a flow direction (SR) of the first medium (LL), wherein the angle ($\alpha$) assumes values between 40° and 70°, in particular values between 45° and 65°.

**Revendications**

1. Echangeur de chaleur à plaques empilées servant au refroidissement d'air de suralimentation, comprenant au moins un premier conduit d'écoulement (21) prévu pour la circulation au moins d'un premier milieu (LL) et comprenant au moins un deuxième conduit d'écoulement (22) prévu pour la circulation au moins d'un deuxième milieu (KM) destiné au refroidissement du premier milieu (LL),
où le premier conduit d'écoulement (21) au moins au nombre de un et le deuxième conduit d'écoulement (22) au moins au nombre de un sont configurés entre des plaques contiguës (8, 9), et au moins une plaque (8, 9) présente au moins une première ouverture (12) prévue pour la circulation du premier milieu (LL) et au moins deux deuxièmes ouvertures (13) prévues pour l'entrée d'écoulement du deuxième milieu (KM), lesdites ouvertures étant placées dans le deuxième conduit d'écoulement (22) au moins au nombre de un, où la première ouverture (12) au moins au nombre de un est disposée au moins partiellement entre les deux deuxièmes ouvertures (13), où la première ouverture (12) présente au moins partiellement une distance, par rapport à une partie médiane (MA) de l'échangeur de chaleur à plaques empilées (1), inférieure à l'une des deuxièmes ouvertures (13), **caractérisé en ce qu'**au moins un bourrelet (14) servant à faire la séparation entre le deuxième milieu (KM) et le premier milieu (LL), et servant aussi à guider l'écoulement du deuxième milieu (KM), est configuré à partir de la plaque (8, 9) au moins au nombre de un, et **en ce qu'**au moins une partie d'extrémité de bourrelet (15) du bourrelet (14) au moins au nombre de un est configurée, dans la zone des deuxièmes ouvertures (13), pratiquement en forme de delta, et **en ce que** la partie d'extrémité de bourrelet au moins au nombre de un entoure au moins partiellement au moins l'une des deuxièmes ouvertures (13), et au moins une arête (16) servant à la délimitation de la première ouverture (12) au moins au nombre de un est configurée au moins partiellement, pratiquement en forme de V, et en ayant au moins une partie bombée.

2. Echangeur de chaleur à plaques empilées servant au refroidissement d'air de suralimentation selon la revendication 1, **caractérisé en ce qu'**au moins un téton (17) est formé dans au moins une partie de pénétration de la plaque (SEA), ledit téton servant au renfort et / ou au maintien de l'espacement de la partie de pénétration de la plaque (SEA) au moins au nombre de un.

3. Echangeur de chaleur à plaques empilées selon la revendication 1 ou 2, **caractérisé en ce que** le bourrelet (14) au moins au nombre de un s'étend à partir de la deuxième ouverture (13), jusqu'à l'autre deuxième ouverture (13).

4. Echangeur de chaleur à plaques empilées selon l'une quelconque des revendications précédentes, **caractérisé en ce que** la première ouverture (12) est configurée de façon symétrique.

5. Echangeur de chaleur à plaques empilées selon l'une quelconque des revendications 1 à 4, **caractérisé en ce que** l'arête (16) au moins au nombre de un présente au moins partiellement, pratiquement la forme d'une fonction de distribution normale et / ou au moins d'un polynôme de degré n.

6. Echangeur de chaleur à plaques empilées selon l'une quelconque des revendications 1 à 5, **caractérisé en ce qu'**un profil de l'arête (16) au moins au nombre de un prend au moins partiellement la forme du polynôme $y_n = a_n x^4 + b_n x^3 - c_n x^2 + d_n x + e_n$, avec n = 1, 2, 3, 4, ....

7. Echangeur de chaleur à plaques empilées selon l'une quelconque des revendications 1 à 6, **caractérisé en ce que** l'arête (16) au moins au nombre de un est espacée, dans la zone de la partie de pénétration de la plaque (SEA), d'un bord de plaque (18) de la plaque (8, 9), à une distance de 2 mm à 30 mm, en particulier de 5 mm à 20 mm.

8. Echangeur de chaleur à plaques empilées selon l'une quelconque des revendications 1 à 7, **caractérisé en ce qu'**au moins une arête (16) présente une partie d'arête (20) qui forme au moins partiellement un angle ($\alpha$) avec une direction d'écoulement (SR) du premier milieu (LL), où l'angle ($\alpha$) prend des valeurs comprises entre 40° et 70°, en particulier des valeurs comprises entre 45° et 65°.

EP 1 901 020 B1

LLA

KMA

MA

KME

LLE

3

5

2

10

13

22

21

SR

8

12

9

13

8

9

7

SKn

13

18

MA

11

6

4

13

12

13

**Figur 1**

8

18

17 14 14 15 17

**Figur 2a**

Detail A

13 14

13 8

15 17

12

16

SR

17

12 16

14

17

13

13 15

**Figur 2b**

**Figur 3**

**Figur 4**

06-B-124

EP 1 901 020 B1

EP 1 901 020 B1

$y \ [mm]$

$y_3 = -b_3 x^3 + c_3 x^2 - d_3 x + e_3$

$y_4 = -d_4 x + e_4$

$y_5 = -b_5 x^3 + c_5 x^2 - d_5 x + e_5$

$y_6 = -d_6 x + e_6$

$y_2 = -a_2 x^4 + b_2 x^3 - c_2 x^2 + d_2 x + e_2$

$y_7 = -b_7 x^3 + c_7 x^2 - d_7 x + e_7$

$16$

$y_8 = -d_8 x + e_8$

$y_1 = b_1 x^3 - c_1 x^2 + d_1 x + e_1$

$y_9 = -b_9 x^3 + c_9 x^2 - d_9 x + e_9$

$x \ [mm]$

**Figur 5**

EP 1 901 020 B1

**Figur 6**

Detail A

**Figur 7**

| | Beginn | Ende | Funktion der Ausgleichskurve |
|---|---|---|---|
| 1. Abschnitt | 0 | 3 | y = 1.1409x3 - 7.0677x2 + 17.735x + 0.0587 |
| 2. Abschnitt | 3 | 34.073 | y = -4E-05x4 + 0.0038x3 - 0.1499x2 + 3.7064x + 10.253 |
| 3. Abschnitt | 34.073 | 51.38 | y = -0.0021x3 + 0.2127x2 - 6.7218x + 125.6 |
| 4. Abschnitt | 51.38 | 52.827 | y = -2.7464x + 194.06 |
| 5. Abschnitt | 52.827 | 65.976 | y = -0.0043x3 + 0.8294x2 - 53.952x + 1216.5 |
| 6. Abschnitt | 65.976 | 67.599 | y = -0.3635x + 59.81 |
| 7. Abschnitt | 67.599 | 83.319 | y = -0.0014x3 + 0.2857x2 - 19.463x + 486.83 |
| 8. Abschnitt | 83.319 | 93.16 | y = -1.732x + 166.36 |
| 9. Abschnitt | 93.16 | 94.5 | y = -3.5275x3 + 990.69x2 - 92746x + 3E+06 |

EP 1 901 020 B1

Figur 8

**06-B-124**

Figur 10

Figur 9

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005043294
- DE 10352880
- DE 10352881
- WO 0167021 A1